# EUROPEAN PATENT APPLICATION

(11) **EP 4 534 499 A1**
(43) Date of publication of application: **09.04.2025**
(21) Application number: 23202109.7
(22) Date of filing: 06.10.2023
(51) Int. Cl.: C04B 20/02, C04B 22/00, C04B 28/02, C04B 103/12, C04B 103/14

(54) **PRODUCING HARDENIG ACCELERATORS FOR MINERAL BINDERS**

(71) Applicant: Sika Technology AG, 6340 Baar (CH)
(72) Inventor: MÜLLER, Thomas, 69207 Sandhausen (DE); HELLER, Thomas, 74909 Meckesheim (DE); MAYER, Andreas, 74834 Elztal (DE)
(74) Representative: Sika Patent Attorneys

(57) **Abstract**

A process for producing a setting and/or hardening accelerator for mineral binders, comprises a step of grinding an inert mineral material in a liquid medium containing a dispersing agent and an amino alcohol.

## Description

### Technical field

The invention relates to a process for producing a setting and/or hardening accelerator for mineral binders, comprising a step of grinding an inert mineral material in a liquid, and to a setting and/or hardening accelerator obtained with such a process. A further aspect of the invention is related to the use of an amino alcohol during a process of grinding of the inert mineral material in the liquid medium.

### Background art

Setting or hardening accelerators are used in mineral binders in order to accelerate the setting and/or hardening of binder compositions after mixing with water.

This can, for example, be necessary in order to make concreting at low temperatures possible or to increase the early strengths of mortar or concrete compositions. High early strengths of mortar or concrete compositions allow, in particular, faster removal from formwork and earlier application of loads or prestresses in mortar- or concrete-based buildings. Thus, an increase in the early compressive strength can, for example, increase the climbing performance in the case of sliding formwork or allow earlier final working of vertical concrete facades due to earlier removal from the formwork. Furthermore, a requirement for heat treatment of the concrete to increase the early strengths can be reduced or can become unnecessary as a result of the use of accelerators.

Accelerators which have been customary for a long time are for example based on amino alcohols, halides, pseudohalides, nitrites, nitrates, aluminum salts or carbonates (e.g. lithium carbonate).

Newer and particularly effective accelerator compositions are based, inter alia, on synthetic calcium silicate hydrates as accelerating substances. In this context, WO 2010/026155 A1 (Construction Research & Technology GmbH) describes, for example, an accelerator composition which is produced by means of a precipitation reaction of a calcium compound and a silicon compound in the presence of a water-soluble comb polymer.

Such accelerator compositions are quite effective in certain binders but require relatively complicated and expensive production processes.

Another approach is described in US 2020/0231500 A1 (Sika Technology AG). Thereby, setting and/or hardening accelerators are produced by grinding a mineral solid, such as mineral binders and/or rock material, in a liquid medium, e.g. water. However, in this approach stability and processability of resulting accelerator suspensions is an issue.

Other accelerators used in practice contain nitrates as a result of the production processes, which makes use difficult or even impossible in the field of prestressed and steel-reinforced concretes.

There is therefore still a need for improved accelerators for mineral binders and more efficient manufacturing processes that have fewer or none of the disadvantages mentioned above.

### Disclosure of the invention

It is an object of the present invention to provide improved solutions for providing accelerating additives. The accelerating additives should be suitable, in particular, for applications in the field of prestressed concretes and steel-reinforced concrete. In particular, processes for producing the accelerating additives should be kept as simple as possible and be very economical.

It has surprisingly been found that the object of the invention in respect of production processes can be achieved by a process as claimed in claim 1. Thus, according to the invention, a process for producing a setting and/or hardening accelerator for mineral binders comprises a step of grinding an inert mineral material in a liquid medium containing a dispersing agent and an amino alcohol.

As has been found, very fine particles can be produced from the inert mineral material by the process of the invention, and these can then be used as surprisingly effective setting and/or hardening accelerators. The process itself can be carried out with relatively little effort, for example in commercially available stirred mills, e.g. bead mills. Therefore, complicated systems and processes can be dispensed with.

This is surprising because far lower strength increases in mineral binders were achieved using inert mineral material that was grinded only in the dry state or in the absence of a dispersant and/or amino alcohol.

Without wishing to be bound to theory, it is assumed that the formation of primary particle agglomerates can be reduced in the grinding process according to the invention due to the synergistic interplay between the liquid medium, the dispersant and the amino alcohol. In contrast to dry grinding or to grinding without dispersant and/or amino alcohol, primary particles most likely are enveloped by liquid molecules and kept more stable spaced apart from each other due to the simultaneous action of the dispersant and the amino alcohol in the liquid medium. Specifically, in the liquid medium, the amino alcohol seems to amplify the dispersing effect of the dispersant, especially of polycarboxylate ether dispersants. The primary particles can therefore be comminuted further to particle sizes of well below 500 nm or even below 100 nm by renewed energy input. Particles of this size can thus serve as nuclei for crystal growth, which promotes the hydration of mineral binders.

Furthermore, the compressive strengths of mineral binder compositions can be significantly increased by means of the accelerators of the invention, in particular 6-8 hours after mixing with water.

In addition, the accelerators of the invention are of great interest with regard to cost/performance ratio since they may be prepared from low cost inert materials such as limestone.

Moreover, it has been found that the hardening accelerators of the invention are significantly less problematic than many known accelerators in respect of the undesirable stiffening behavior of mineral binders or mineral binder compositions, in particular cement-based systems. Compared to unaccelerated mineral binder compositions, the accelerators of the invention in practice allow, for example, finished parts produced to be removed from formwork significantly earlier.

Also, it has been found that the setting and/or hardening accelerators of the invention are effective in wide ranges independently of the mineral binders in which they are used.

The setting and/or hardening accelerators of the invention are also compatible with conventional hardening accelerators, for example substances such as chlorides, nitrates, nitrites, thiocyanates and/or alkanolamine. Accordingly, the hardening accelerators of the invention can readily be combined with such substances. As a result, the accelerating action can be increased and/or matched in the best possible way to specific requirements where necessary for specific applications. This can, for example, be the case when the hardening accelerators are used outside the fields of prestressed concrete and steel-reinforced concrete.

However, it has surprisingly also been found that when such substances which are problematical for particular applications, for example chlorides, nitrates, nitrites, and/or thiocyanates, are dispensed with, excellent accelerating effects can nevertheless be achieved for most applications, in particular in prestressed concretes and steel-reinforced concrete.

Additional aspects of the invention are subject of further independent claims. Particularly preferred embodiments are outlined throughout the description and the dependent claims.

### Ways of carrying out the invention

A first aspect of the present invention is directed to a process for producing a setting and/or hardening accelerator for mineral binders, comprising a step of grinding an inert mineral material in a liquid medium containing a dispersing agent and an amino alcohol.

The term "to grind" or "grinding" refers, in particular, to a process in which an average particle size of a solid material or of a mixture of various solid materials is reduced. This is typically carried out in a mill, e.g. in an agitator mill. The grinding of the solid is carried out, in particular, at temperatures below 300° C, preferably below 150° C, more preferably below 110° C. Particularly preferred temperatures are in the range 10-110° C, in particular 20-50° C.

In the present context, an "inert mineral material" is, in particular, a solid inorganic material, e.g. selected from quartz, limestone and/or pigments. Especially, the inert mineral material is a concrete additive of type I according to standard EN 206:2021 / DIN 1045-2:2023, i.e. an almost inactive additive. In particular, the inert mineral material as such essentially has no hydraulic or pozzolanic properties. Nevertheless, it may contribute to the hydration process in mineral binders as an accelerator.

The inert mineral material can be present as pure substance, as a mixture of a plurality of different substances and/or as a mixture with further solid and/or liquid substances.

The inert mineral material is, in particular, present in particulate form. For the present purposes, the term "particle" or "particulate" refers, in particular, to solids having an average particle size of less than 1000 µm, in particular less than 500 µm, preferably less than 100 µm. The particle size, the distribution thereof or the average particle size can be determined, in particular, by laser light scattering, preferably in accordance with the standard ISO 13320:2009. In particular, a Mastersizer 2000 instrument with a dispersing unit Hydro 2000G and the software Mastersizer 2000 from Malvern Instruments GmbH (Germany) is used for this purpose. Isopropanol, for example, is suitable as measurement medium. The average particle size corresponds in the present case to, in particular, the D50 value (50% of the particles are smaller than the indicated value, 50% are accordingly larger).

Especially, the inert mineral material contains or consists of rock and/or ground rock. In particular, the inert mineral material contains or consists of carbonates, particularly preferably alkaline earth metal carbonates. Calcium carbonate (CaCOs), magnesium carbonate (MgCOs), calcium magnesium carbonate [CaMg(CO3)₂] or mixtures thereof are especially suitable. The substances mentioned can be present as coarsely particulate rocks or in milled form as rock flours.

In a particularly advantageous embodiment, the inert mineral material contains or consists of limestone and/or limestone flour. For the present purposes, limestone is calcium carbonate, in particular in the form of CaCOs. In particular, the limestone is present in the form of the minerals calcite, aragonite and/or vaterite. Limestone flour is accordingly limestone in the form of a flour.

It has surprisingly been found that, at a comparable particle size, rocks ground according to the invention or rock flours, e.g. limestone, have a better accelerating effect than corresponding but precipitated substances, e.g. precipitated calcium carbonate.

Amino alcohols for use in the present invention can be selected from a wide variety of knowns compounds. Especially, the amino alcohol is selected from N-ethyldiethanolamine (EDEA), N,N-bis (2-hydroxyethyl)-2-propanolamine (DEIPA), N-butyldiethanolamine (BDEA), triethanolamine (TEA), 2-(diisopropylamino)ethanol, 2-(2-aminoethylamino)ethanol, N,N,N'-trimethylaminoethylethanolamine, N,N'-bis-(2-hydroxyethyl)ethylenediamine, N-methyldiethanolamine (MDEA), diethanolamine (DEA), 2-amino-2-methyl-1,3-propanediol (AMPD), tris(hydroxymethyl)aminomethane (TRIS), 3-amino-1,2-propanediol (APD), 2-(2-aminoethoxy)ethanol, diisopropanolamine (DiPA), triisopropanolamine (TiPA), N,N,N',N'-tetrakis(2-hydroxypropyl)ethylenediamine (THPED) and/or N-methyldiisopropanolamine (MDiPA). Also, mixtures of two or more amino alcohols can be used.

In particular, the amino alcohol comprises at least one primary alcohol group, especially it comprises solely primary alcohol groups.

Also, according to a preferred embodiment, the amino alcohol comprises a tertiary amine group, especially it comprises solely tertiary amine groups.

In particular, the amino alcohol comprises two alcohol groups and one amine group, especially it is a N-alkyldialkanolamine, especially with an alkyl group having 1 - 3 carbon atoms and alkanol groups with 2 - 4 carbon atoms.

Especially preferred the amino alcohol is a N-alkyldiethanolamine. Of particular interest is N-methyldiethanolamine (MDEA).

Amino alcohols with such structural units and in particular N-methyldiethanolamine turned out to be highly beneficial in terms of dispersing the inert mineral material together with the dispersant in the liquid medium.

A proportion of the amino alcohol with respect to the total weight of the inert mineral material and the liquid medium preferably is in the range of 0.01 - 10 wt.%, especially 0.1 - 5 wt.%, in particular 1 - 3 wt.%. For special applications, other proportions might be suitable as well.

The dispersant in particular is a superplasticizer. For example, the dispersant can be chosen from lignosulfonate, sulfonated naphthalene-formaldehyde condensate, sulfonated melamine-formaldehyde condensate, sulfonated vinyl copolymers, polycarboxylate ethers or mixtures thereof.

Especially preferred, the dispersant comprises or consists of a polycarboxylate ether, in particular a polycarboxylate ether with a polycarboxylate backbone and polyether side chains, wherein the polyether side chains are bound preferably via ester, ether and/or amide groups to the polycarboxylate backbone.

A weight average molecular weight (Mw) of the polycarboxylate ether is, in particular, 5'000-150'000 g/mol, especially 10'000-100'000 g/mol, for example 20'000 - 50'000 g/mol. The weight average molecular weight (Mw) here and below in particular is determined by gel permeation chromatography (GPC), wherein polyethylene glycol (PEG) is used as standard.

A weight average molecular weight of the side chains preferably is from 500 - 10'000 g/mol. Especially preferred the weight average molecular weight of the side chains is 3'500-7'000 g/mol, especially 4'000 - 6'000 g/mol.

A weight average molecular weight of the backbone preferably is from 3'000 - 9'000 g/mol, in particular 5'000 - 7'000 g/mol.

Especially, preferred, the backbone is based on a mixture of acrylate monomers and methacrylate monomers whereby a molar ratio of the acrylate monomers and the methacrylate monomers is in particular 25:75-75:25, especially 40:60-60:40.

A molar ratio (C/E) of acid group carrying monomers, especially acrylic acid and/or methacrylic acid monomers, to the side chain carrying monomers is, preferably, from 1.5 - 20, in particular 3 - 20, especially 5 - 15, for example 8 - 13.

In particular, the polycarboxylate ether comprises or consists of the following structural units:
a) a mole fractions of a partial structural unit S1 of formula (I) 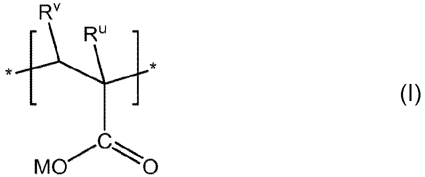
b) b mole fractions of a partial structural unit S2 of formula (II) 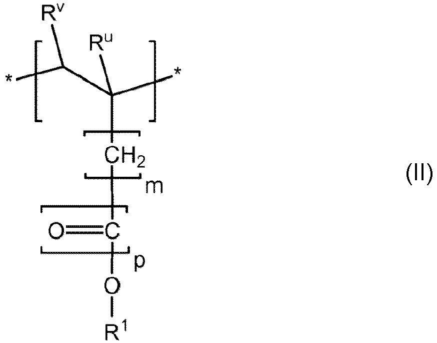
c) c mole fractions of a partial structural unit S3 of formula (III) 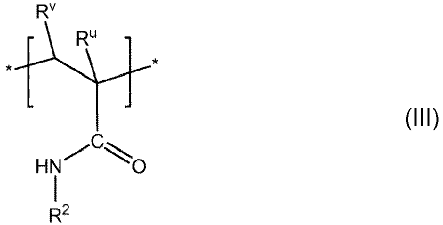
d) d mole fractions of a partial structural unit S4 of formula (IV) 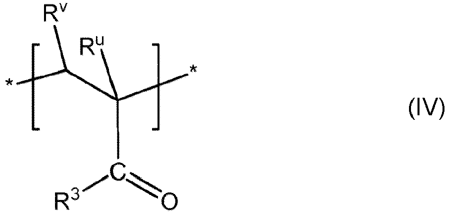
wherein
M independently of one another represents H⁺, an alkali metal ion, alkaline earth metal ion, a bi- or trivalent metal ion, an ammonium ion or an organic ammonium group,
each R^{u} independently of the others stands for hydrogen or a methyl group,
each R^{v} independently of the others stands for hydrogen or COOM,
m=0, 1 or 2,
p=0 or 1,
R¹ and R² independently of one another stand for a C₁ to C₂₀ alkyl group, cycloalkyl group, alkylaryl group or for -[AO]ₙ-R⁴,
   wherein A independently of one another are C₂ to C₄ alkylene, R⁴ stands for H, a C₁ to C₂₀ alkyl group, cyclohexyl group or alkylaryl group,
   and n=2-250,
R³ independently of one another stands for NH₂, -NR⁵R⁶, -OR⁷NR⁸R⁹,
   wherein R⁵ and R⁶ independently of one another stand for
   a C₁ to C₂₀ alkyl group, cycloalkyl group, alkylaryl group or aryl group, or for a hydroxyalkyl group or for an acetoxyethyl (CH₃-CO-O-CH₂-CH₂-) or a hydroxyisopropyl (HO-CH(CH₃)-CH₂-) or an acetoxyisopropyl (CH₃-CO-O-CH(CH₃)-CH₂-) group; or R⁵ and R⁶ together form a ring of which the nitrogen is a part, in order to build a morpholine or imidazoline ring;
   R⁷ is a C₂-C₄ alkylene group,
   R⁸ and R⁹ each independently of one another represent a C₁ to C₂₀ alkyl group, cycloalkyl group, alkylaryl group, aryl group, or a hydroxyalkyl group,
and wherein a, b, c and d represent mole fractions of the respective structural units S1, S2, S3 and S4, where a/b/c/d=(0.05-0.95)/(0.05-0.95)/(0-0.8)/(0-0.8), in particular a/b/c/d=(0.3-0.95)/(0.05-0.7)/(0-0.6)/(0-0.4), preferably a/b/c/d=(0.5-0.95)/(0.05-0.5)/(0.001-0.005)/0 or a/b/c/d=(0.5-0.95)/(0.05-0.5)/0/0, and with the proviso that a+b+c+d=1.

Preferably, the structural units S1, S2, S3 and S4 together account for a proportion by weight of at least 50 wt.%, in particular at least 90 wt.%, most particularly preferably at least 95 wt.%, of the total weight of the polycarboxylate ether.

The preparation of the polycarboxylate ethers itself is known to the person skilled in the art and it can occur, for example, by radical polymerization of the corresponding ethylenically unsaturated monomers. Such kind of polycarboxylate ethers and the preparation thereof are described, for example, in EP 2 468 696 A1 (Sika Technology AG).

Also possible is the preparation of the polycarboxylate ethers by a polymer-analogous reaction whereby a polycarboxylic acid is esterified and/or amidated with the corresponding alcohols or amines (for example, HO-R¹, H₂N-R², H-R³). Details on the polymer-analogous reaction are disclosed, for example, in EP 1 138 697 B1 on page 7, line 20 to page 8, line 50 as well as in its examples, or in EP 1 061 089 B1 on page 4, line 54 to page 5, line 38 as well as in its examples.

Corresponding polycarboxylate ethers are marketed by Sika Schweiz AG under the trade name ViscoCrete^{®}.

Preferred are polycarboxylate ethers, wherein R¹ or R² independently of one another stands for -[AO]ₙ-R⁴, wherein A independently of one another are C₂ to C₄ alkylene, R⁴ stands for H, a C₁ to C₂₀ alkyl group, cycloalkyl group or alkylaryl group, and n=2-250.

Most particularly suitable are polycarboxylate ethers with one or more of the following features:
a) m = 0 and p=1;
b) the residue R^{v} stands for hydrogen and the residue R^{u} stands for hydrogen or for a methyl group or for a mixture of a methyl group and hydrogen; especially the residue R^{v} stands for hydrogen and the residue R^{u} stands for a mixture of a methyl group and hydrogen whereby, especially, a molar ratio of the methyl group to the hydrogen is 25:75-75:25, in particular 40:60-60:40.
c) R¹, in each case independently of one another, stands for -[AO]ₙ-R⁴ with n= 80 - 250 and A = C₂ alkylene and R⁴ advantageously represents H or a methyl group.
d) A weight average molecular weight of the group -[AO]ₙ-R₄ is 3'500-7'000 g/mol, especially 4'000 - 6'000 g/mol.
e) A ratio a/(b+c+d) is = 1.5 - 20, in particular 3 - 20, especially 5 - 15, for example 8 - 13.
f) a/b/c/d=(0.5-0.8)/(0.2-0.4)/0/0.

Especially all features a) to d) or all features a) to e) or all features a) to f) are realized in combination. Thereby, in particular, the residue R^{v} stands for hydrogen and the residue R^{u} stands for a mixture of a methyl group and hydrogen a molar ratio of the methyl group to the hydrogen is in particular 25:75-75:25, especially 40:60-60:40.

Polycarboxylate ethers and in particular the representatives described above turned out to be highly beneficial to achieve the advantages according to the invention.

A proportion of the dispersant, especially the polycarboxylate ether, with respect to the total weight of the inert mineral material and the liquid medium preferably is 0.01 - 10 wt.%, especially 0.1 - 5 wt.%, in particular 1 - 3 wt.%.

The dispersant can be provided in solid form or in liquid form, e.g. as a solution or suspension. However, the proportion is always meant to be with respect to the content of the dispersant as such.

A weight ratio of the dispersant to the amino alcohol preferably is from 0.25 - 4, especially 0.5 - 2, in particular 0.7 - 1.5. In particular, a proportion of the amino alcohol is higher than a proportion of the dispersant. Thereby, absolute proportions preferably are set as described above.

The liquid medium preferably contains water and/or alcohol, especially water.

In particular, based on the total weight of the liquid medium and the inert mineral material, the inert mineral material in the liquid medium has a proportion of 5-95 wt.%, especially 20 - 60 wt.%, in particular 40 - 60 wt.% or 45 - 55 wt.%.

With such proportions, particularly effective grinding of the inert mineral material can be achieved and highly effective, stable and pumpable suspensions of the setting and/or hardening accelerator can be obtained. Nevertheless, other proportions can also be suitable for specific inert mineral materials and/or in the case of particular liquid media.

In particular, during the grinding process, a proportion of mineral binder, especially cementitious mineral binder, is below 1 wt.%, in particular below 0.1 wt.% or 0 wt.%, based on the total weight the inert mineral material. Also, the setting and/or hardening accelerator produced with the method according to the invention has correspondingly small proportions of mineral binder.

Especially, the inert mineral material before grinding is provided in the form of a flour and/or in the form of a particulate material having an average particle size (D50) of from 0.0001 to 1.0 mm, in particular 0.001 -0.5 mm.

In a further advantageous embodiment, the inert mineral material is dispersed in the liquid medium before grinding. Dispersion is carried out, in particular, by application of shear forces, with agglomerates present in the inert mineral material preferably being broken up. Dispersion is preferably carried out in such a way that a toroidal flow pattern and/or a 360° drift rotation are immediately established in the liquid medium during dispersion. Optimal dispersion is made possible in this way. Suitable dispersing apparatuses are known per se to a person skilled in the art. High-speed mixers or disk stirrers have been found to be particularly useful for the present purposes.

In the method according to the invention, the inert mineral material preferably is grinded to particles having a particle size expressed as D90 value of < 600 nm, in particular <300 nm, preferably <200 nm, in particular <100 nm, especially <60 nm or <25 nm. D90 means that 90% of the particles are smaller than the value indicated, while 10% of the particles are larger.

Such particle sizes and particle size distributions have given particularly effective setting and/or hardening accelerators.

Especially, grinding is performed until a dynamic viscosity in the range of 50 - 500 mPa s, especially 75 - 200 mPa s, at a temperature of 20°C and a shear rate of 500 s⁻¹ is obtained; and/or a dynamic viscosity in the range of 1'000 - 50'000 mPa s, especially 1'500 - 5'000 mPa s, at a temperature of 20°C and a shear rate of 1 s⁻¹ is obtained. Likewise, a setting and/or hardening accelerator obtained with the method according to the invention preferably has corresponding dynamic viscosities.

Further preference is given to adding at least one admixture, in particular a concrete admixture, a mortar admixture and/or a process chemical, before, during and/or after grinding. The admixture in particular is chemically different from the dispersant and the amino alcohol.

The admixture is, in particular, selected from the group consisting of dispersants, fluidizers, plasticizers, air pore formers, antifoams, preservatives, biocides, dyes, accelerators, retarders, shrinkage reducers, corrosion inhibitors and combinations thereof.

Furthermore, it can be advantageous to add viscosity-altering and/or suspension-stabilizing admixtures. These can be, in particular, cellulose, e.g. (derivatized) methyl cellulose, and/or starch, e.g. (derivatized) potato starch. Possible sedimentation of the solid particles can be reduced or prevented in this way.

As has been found, the setting and/or hardening accelerators which can be produced according to the invention are generally readily compatible with such admixture. In this way, it is possible to achieve, for example, flexible matching to specific uses.

A proportion of the admixture is, in particular, 0.001-10 wt.%, preferably 0.01-7 wt.%, especially preferably 0.05-6 wt.% or 0.1-5 wt.%, based on the weight of the inert mineral material. An optimal effect of the admixture is achieved in this way.

Inert mineral material that has been grinded with the method according to the invention can, in particular, be used as suspensions without further treatment directly as setting and/or hardening accelerators. However, it can be advantageous to dilute the ground inert mineral material with a further liquid medium, in particular water, before use. In this way, the dosability and/or storage stability, for example, can be improved.

Another aspect of the invention is directed to the use of an amino alcohol in combination with a dispersant for dispersing an inert mineral material in a liquid medium during a process of grinding the inert mineral material in the liquid medium.

Thereby, the amino alcohol, dispersant, inert mineral material, liquid medium their proportions and the grinding process in particular are defined and implemented as described above.

In particular, the amino alcohol is used as a dispersing aid to enhance the dispersing action of the dispersant. The enhancement in particular is meant to be with respect to the dispersing action of the dispersant in an essentially similar composition alone, i.e. without the amino alcohol.

Especially, the amino alcohol is used for reducing a dynamic viscosity of the composition obtained from the grinding process, especially at shear rates of 1 s⁻¹ and/or 500 s⁻¹ and a temperature of 20°C. The reduction in particular is meant to be with respect to the viscosity during grinding without the amino alcohol but otherwise essentially identical conditions. Thereby, the composition obtained from the grinding process comprises the inert mineral material in the liquid medium, especially without any further treatment.

Especially, the amino alcohol is used for increasing a fineness of the ground inert mineral material. The increase in particular is meant to be with respect to the D90 value of the inert mineral material after the grinding process and a grinding process without the amino alcohol but otherwise essentially identical conditions. Thereby, a higher fineness means a lower D90 value.

It comes with surprise that amino alcohols can be used together with dispersants for the specific purpose of improving the overall dispersing action, for enhancing the dispersing action of the dispersant, for reducing the viscosity of the composition obtained from the grinding process and/or for increasing the fineness of the ground inert material.

A further aspect of the present invention concerns a setting and/or hardening accelerator for a mineral binder.

The setting and/or hardening accelerator is, in particular, obtainable from a method or use as described above.

The setting and/or hardening accelerator contains an inert mineral material as described above, and, in particular the dispersant, the amino alcohol and/or the liquid medium as described above. The inert mineral material in the setting and/or hardening accelerator preferably has a particle size expressed as D90 of <600 nm, in particular <300 nm, preferably <200 nm, in particular <100 nm, very particularly <60 nm, especially <25 nm.

In particular, the inert mineral material contains or consists of limestone, limestone flour, quartz flour, pigments and mixtures thereof. Limestone and/or limestone flour is preferred.

A proportion of mineral binder, especially cementitious mineral binder, is below 1 wt.%, in particular below 0.1 wt.% or 0 wt.%, based on the total weight the setting and/or hardening accelerator.

The setting and/or hardening accelerator can in principle be present in a wide variety of forms, for example in liquid and/or solid form.

The setting and/or hardening accelerator is particularly preferably present in liquid form, in particular as suspension, preferably as aqueous suspension, with inert mineral material particularly being present in the form of suspended particles.

The setting and/or hardening accelerator preferably has a solids content or a proportion of inert mineral material of 5-95 wt.%, especially 20 - 60 wt.%, in particular 40 - 60 wt.% or 45 - 55 wt.%, based on the total weight of the setting and/or hardening accelerator.

The setting and/or hardening accelerator very particularly preferably contains water and/or alcohol, preferably water.

Such suspensions can firstly be metered readily and effectively mixed into mineral binder compositions. Secondly, setting and/or hardening accelerators in the form of suspensions are obtainable without further treatment directly from the above-described methods. This considerably simplifies production.

In a further aspect, the present invention provides a composition, in particular a mineral binder composition, containing a component of a mineral binder composition, in particular a mineral binder and/or aggregates and/or an admixture, and a setting and/or hardening accelerator as described above. In particular, the composition is a binder composition containing a mineral binder. The composition can, for example, be present in dry form or as a fluid or partially stiffened binder composition which has been made up with mixing water. The composition can also be present as a hardened binder composition, e.g. as shaped body.

The expression "mineral binder" refers, in particular, to a binder which reacts in the presence of water in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a nonhydraulic binder (gypsum or white lime). A "mineral binder composition" is accordingly a composition containing at least one mineral binder.

In particular, the mineral binder or the binder composition contains a hydraulic binder, preferably cement. The mineral binder in particular is cement of type CEM I, II, III, IV or V (in accordance with the standard EN 197-1). Cements produced in accordance with another standard, such as according to ASTM standard or Indian standard, are suitable as well.

In a further preferred embodiment, the mineral binder contains calcium aluminate cement (high-alumina cement) and/or calcium sulfoaluminate cement or the mineral binder consists thereof. Calcium aluminate cement has monocalcium aluminate as main constituent. The reactive main constituent of calcium sulfoaluminate cement is based on the mineral ye'elimite.

As aggregates, it is possible, for example, for rock particle size fractions, gravel, sand (in natural and/or processed (e.g. crushed) form) and/or fillers to be present.

A proportion of the setting and/or hardening accelerator based on the weight of the mineral binder is in particular 0.01-10 wt.%, especially 0.1-5 wt.%.

In addition, an admixture as described above, in particular a concrete admixture, a mortar admixture and/or a process chemical, is optionally present in the composition.

The composition can additionally contain water. For example, the composition can be present as a fluid or partially stiffened binder composition made up with mixing water. In the case of a fluid binder composition made up with mixing water, a ratio of water to mineral binder is preferably 0.15-0.80, in particular 0.25-0.75 or 0.35-0.65. Such binder compositions can be processed directly as mortar or concrete mixtures.

Furthermore, the present invention provides a shaped body obtainable by hardening a composition as described above, after addition of water. The shaped body produced in this way can have virtually any desired shape and be, for example, a constituent of a building work, e.g. a building, masonry or a bridge.

The present invention further provides a process for producing a composition. Here, a setting and/or hardening accelerator as described above, in particular in the form of an aqueous suspension, is mixed with a component of a mineral binder composition, in particular a binder and/or aggregates and/or an admixture. In particular, the composition is a binder composition containing a mineral binder, preferably a cement-based binder. The mineral binder can be present as described above and in particular contain the above mentioned hydraulic, latent hydraulic and/or pozzolanic binders.

A proportion of the setting and/or hardening accelerator based on the weight of the mineral binder is in particular 0.01-10 wt.%, especially 0.1-5 wt.%, in use.

In addition, the abovementioned admixtures can be added in the appropriate amounts.

An additional aspect of the present invention provides for the use of a setting and/or hardening accelerator as described above, in particular in the form of an aqueous suspension, for accelerating the setting and/or hardening of a mineral binder and/or of a mineral binder composition, in particular a cement-based binder composition, preferably a mortar and/or concrete composition.

The setting and/or hardening accelerators, suspensions, mineral binders and mineral binder compositions, which are used, are as defined above.

The setting and/or hardening accelerators are used in particular for increasing the compressive strength of mineral binder compositions after 2-24 hours, in particular after 2-12 hours, preferably after 2-8 hours, especially after 6-8 hours, after mixing with water.

Further advantageous implementations of the invention are evident from the exemplary embodiments.

### Exemplary embodiments

### Materials

Polycarboxylate ethers (PCE) having a polycarboxylate backbone and polyethylene oxide side chains (PEG) bound via ester groups were prepared by polymer-analogous reaction. Table 1 give an overview of the PCEs produced.

**Table 1**

| PCE | Average molecular weight of side chains [g/mol] | Backbone type¹⁾ | Ratio C/E²⁾ |
|---|---|---|---|
| **P1** | 5'000 | AA/MAA | 11.9 |
| **P2** | 2'100 | MAA | 2.8 |
| **P3** | 1'900 | AA | 1.9 |

| | | | |
|---|---|---|---|
| ¹⁾ AA = polyacrylic acid; MAA = polymethacrylic acid; AA/MAA = poly(meth)acrylic acid comprising 50 mol.% acrylic acid monomers and 50 mol.% methacrylic acid monomers. ²⁾ C/E = molar ratio of acrylic acid and/or methacrylic acid monomers to side chain carrying monomers. | | | |

As amino alcohols, commercially available MDEA (N-methyldiethanolamine), TEA (triethanolamine) and DEIPA (N,N-bis (2-hydroxyethyl) -2-propanolamine) was used.

As inert mineral material dry milled limestone flour (Calcit MX 10; average particle size = 2.0 µm; available from sh minerals GmbH, Germany) was used.

### Production of hardening accelerator suspensions

To produce a suspension, given proportions of limestone flour, polycarboxylate ether, amino alcohol and water were mixed. The suspension was then ground for a given time or until apparent viscosity increase in a stirred ball mill using milling beads (bead mill) with a predefined energy input (kWh/t).

The so obtained suspensions were collected without further treatment as hardening accelerators.

### Production of mortar compositions

To produce standard mortar compositions, Portland cement (CEM I 52.5 R), sand and mixing water (w/c = 0.4), to which a hardening accelerator described above was added, were mixed in a mechanical mixer.

### Test methods

To determine the effectiveness of the hardening accelerators, compressive strengths of standard mortar mixtures prepared with the accelerators were determined 8 hours after mixing the mortar mixtures with water. Testing to determine the compressive strength (in MPa) was carried out on prisms (40×40×160 mm) in accordance with the standard EN 196-1.

### Tests and results

Table 2 shows the compositions and parameters used for preparing a first set of hardening accelerator suspensions. Also included in table 2 are selected properties of the obtained hardening accelerator suspensions and their effectiveness with respect to the acceleration of mortar compositions.

**Table 2**

| **Name** | **R1** | **A1** | **A2** |
|---|---|---|---|
| **LS¹⁾** | 50 wt.% | 50 wt.% | 50 wt.% |
| **Dispersant²⁾** | P3 / 1.0 wt.% | P3 / 1.0 wt.% | P3 / 1.0 wt.% |
| **Amino alcohol³⁾** | - | MDEA / 2.0 wt.% | MDEA / 2.0 wt.% |
| **Energy input and grinding time⁴⁾** | 560 kWh/t 50 minutes | 560 kWh/t 50 minutes | 815 kWh/t 71 minutes |
| **Dynamic viscosity (shear rate)⁵⁾** | 16'300 mPa·s (1/s) 110 mPa·s (500/s) | 3'500 mPa·s (1/s) 105 mPa·s (500/s) | 26'000 mPa·s (1/s) 310 mPa.s (500/s) |
| **Comment⁶⁾** | VL+; sticky consistency | VL-; flowable | VL+; sticky consistency |
| **Compressive strength after 8 hours⁷⁾** | 11.8 MPa | 19.9 MPa | 22.3 MPa |

| | | | |
|---|---|---|---|
| ¹⁾ Proportion of limestone with respect to overall weight of suspension. ²⁾ Type and proportion with respect to overall weight of suspension. ³⁾ Type and proportion with respect to overall weight of suspension ⁴⁾ kWh/t = energy per ton of material. ⁵⁾ Dynamic viscosity of the suspension after grinding measured with a Brookfield viscosimeter at a temperature of 20°C. ⁶⁾ VL+ = "viscosity limit reached". This means that the grinding process was stopped after apparent increase in viscosity VL- = "viscosity limit not reached". In this case, grinding was stopped after the grinding time indicated in table 1. ⁷⁾ Compressive strength of a mortar sample produced with 50 wt.% of the respective hardening accelerator. For reasons of comparison: The compressive strength without any accelerator after 8 hours was found to be 5.1 MPa. | | | |

The particle sizes (D90) of samples A1 and A2 as determined by laser light scattering in accordance with the standard ISO 13320:2009 was found to be well below 500 nm.

For reasons of comparison, experiments with hardening accelerator suspension were repeated whereby the same amount of MDEA as used in the production of accelerator A1 was added *after* grinding to the mortar mix. Similar experiments were performed with TEA and DEIPA instead of MDEA. Thereby, the compressive strengths indicated in table 3 were obtained. Accelerator suspension A1 is listed as well for comparison.

**Table 3**

| **Accelerator** | **Amino alcohol added after grinding** | **Compressive strength after 8 hours¹⁾** |
|---|---|---|
| R1 | MDEA | 19.5 MPa |
| R1 | TEA | 9.9 MPa |
| R1 | DEIPA | 14.7 MPa |
| A1 | - | 19.9 MPa |

| | | |
|---|---|---|
| ¹⁾ Compressive strength of a mortar sample produce with 50 wt.% of the respective hardening accelerator For reasons of comparison: The compressive strength without any accelerator after 8 hours was found to be 5.1 MPa. | | |

As evident from table 2, with the production process of reference accelerator R1 (not according to the invention), an accelerator suspension with a sticky consistency and rather high viscosity is obtained after 50 minutes of grinding. In contrast, when adding MDEA before grinding (accelerator A1), a flowable accelerator suspension with much lower viscosity is obtained when keeping the same grinding parameters. Therefore, it can be concluded that the amino alcohol enhances the dispersing effect of the dispersant.

Additionally, with accelerator A1, the compressive strength after 8 hours, which is indicative of the accelerating effect, is clearly higher than with reference accelerator R1.

If grinding energy and time is further increased (cf. accelerator suspension A2), an accelerator suspension with higher viscosity is obtained. In this case, the compressive strength is increased as well. This is indicative of a higher fineness of the particles in the accelerator suspension A2.

As evident from table 3, adding the MDEA only after the grinding process results in a similar compressive strength as accelerator suspension A1. However, in comparison with accelerator suspension A1, the viscosity of the suspension is much higher and an additional step of adding the MDEA after grinding is required.

As evident from table 3, the other amino alcohols tested are less effective in terms of accelerating the hardening of mineral binder compositions. Similar results were obtained when adding these amino alcohols before the grinding process. Therefore, MDEA is an especially beneficial amino alcohol for use in the present invention.

Table 4 shows the compositions and parameters used for preparing a second set of hardening accelerator suspensions. Also included in table 4 are selected properties of the obtained hardening accelerator suspensions and their effectiveness with respect to the acceleration of mortar compositions.

**Table 4**

| **Name** | **A3** | **A4** |
|---|---|---|
| **LS¹⁾** | 50 wt.% | 50 wt.% |
| **Dispersant²⁾** | P1 / 1.5 wt.% | P2/1.5 wt.% |
| **Amino alcohol³⁾** | MDEA / 2.0 wt.% | MDEA / 2.0 wt.% |
| **Energy input and grinding time⁴⁾** | 1250 kWh/t | 1250 kWh/t |
| | - | - |
| **Dynamic viscosity (shear rate)⁵⁾** | 2'700 mPa·s (1/s) | 19'800 mPa·s (1/s) |
| | 130 mPa·s (500/s) | 320 mPa·s (500/s) |
| **Comment** | Flowable | Sticky |
| **Compressive strength after 8 hours⁶⁾** | 18.2 MPa | 17.1 MPa |

| | | |
|---|---|---|
| ¹⁾ Proportion of limestone with respect to overall weight of suspension. ²⁾ Type and proportion with respect to overall weight of suspension. ³⁾ Type and proportion with respect to overall weight of suspension. ⁴⁾ kWh/t = energy per ton of material. ⁵⁾ Dynamic viscosity of the suspension after grinding measured with a Brookfield viscosimeter at a temperature of 20°C. ⁶⁾ Compressive strength of a mortar sample produce with 50 wt.% of the respective hardening accelerator. For reasons of comparison: The compressive strength without any accelerator after 8 hours was found to be 3.7 MPa. | | |

As evident from table 4, when using polycarboxylate ether P1 instead of polycarboxylate ether P2, the viscosity of the resulting accelerator suspension is lower and the achievable compressive strength is higher. This is likely due to the different structures of the polymers P1 and P2. Specifically, the longer side chains and the higher ratio of C/E seems to be decisive for these results.

The above-described embodiments merely represent illustrative examples which can be modified in any way within the scope of the invention.

## Claims

1. A process for producing a setting and/or hardening accelerator for mineral binders, comprising a step of grinding an inert mineral material in a liquid medium containing a dispersing agent and an amino alcohol.

2. The process according to claim 1, whereby the amino alcohol comprises two alcohol groups and one amine group, especially the amino alcohol comprises a N-alkyldialkanolamine, in particular a N-alkyldiethanolamine.

3. The process according to any of preceding claims, whereby the amino alcohol comprises N-methyldiethanolamine (MDEA).

4. The process according to any of preceding claims, wherein a proportion of the amino alcohol with respect to the total weight of the inert mineral material and the liquid medium is 0.01 - 10 wt.%, especially 0.1 - 5 wt.%, in particular 1 - 3 wt.%.

5. The process according to any of preceding claims, whereby the dispersant comprises a polycarboxylate ether with the following structural units:
a) a mole fractions of a partial structural unit S1 of formula (I) 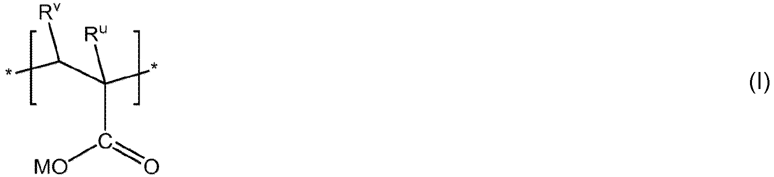
b) b mole fractions of a partial structural unit S2 of formula (II) 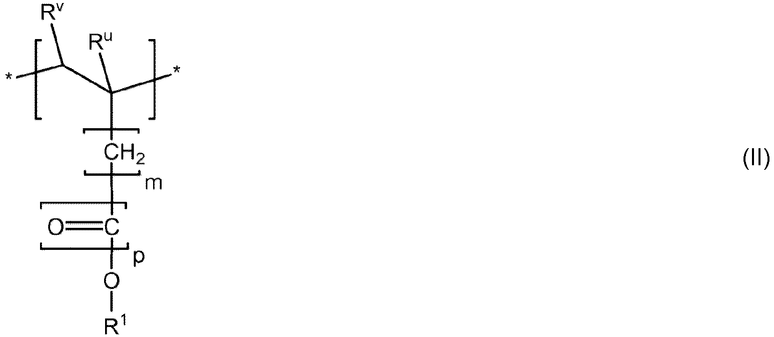
c) c mole fractions of a partial structural unit S3 of formula (III) 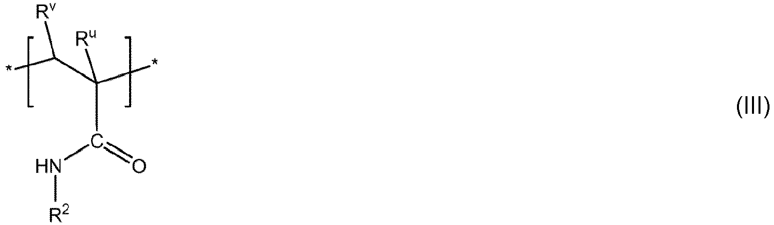
d) d mole fractions of a partial structural unit S4 of formula (IV) 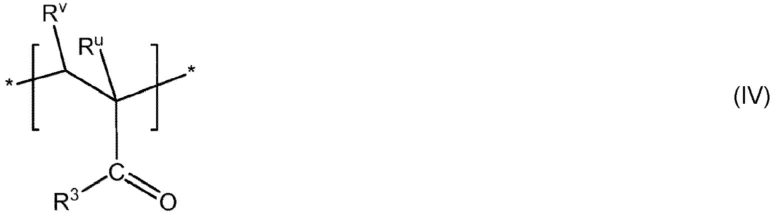
wherein
M independently of one another represents H⁺, an alkali metal ion, alkaline earth metal ion, a bi- or trivalent metal ion, an ammonium ion or an organic ammonium group,
each R^{u} independently of the others stands for hydrogen or a methyl group,
each R^{v} independently of the others stands for hydrogen or COOM,
m=0, 1 or 2,
p=0 or 1,
R¹ and R² independently of one another stand for a C₁ to C₂₀ alkyl group, cycloalkyl group, alkylaryl group or for -[AO]ₙ-R⁴,
wherein A independently of one another are C₂ to C₄ alkylene, R⁴ stands for H, a C₁ to C₂₀ alkyl group, cyclohexyl group or alkylaryl group,
and n=2-250,
R³ independently of one another stands for NH₂, -NR⁵R⁶, -OR⁷NR⁸R⁹,
wherein R⁵ and R⁶ independently of one another stand for
a C₁ to C₂₀ alkyl group, cycloalkyl group, alkylaryl group or aryl group, or for a hydroxyalkyl group or for an acetoxyethyl (CH₃-CO-O-CH₂-CH₂-) or a hydroxyisopropyl (HO-CH(CH₃)-CH₂-) or an acetoxyisopropyl (CH₃-CO-O-CH(CH₃)-CH₂-) group; or R⁵ and R⁶ together form a ring of which the nitrogen is a part, in order to build a morpholine or imidazoline ring;
R⁷ is a C₂-C₄ alkylene group,
R⁸ and R⁹ each independently of one another represent a C₁ to C₂₀ alkyl group, cycloalkyl group, alkylaryl group, aryl group, or a hydroxyalkyl group,
and wherein a, b, c and d represent mole fractions of the respective structural units S1, S2, S3 and S4, where a/b/c/d=(0.05-0.95)/(0.05-0.95)/(0-0.8)/(0-0.8), in particular a/b/c/d=(0.3-0.95)/(0.05-0.7)/(0-0.6)/(0-0.4), preferably a/b/c/d=(0.5-0.95)/(0.05-0.5)/(0.001-0.005)/0 or a/b/c/d=(0.5-0.95)/(0.05-0.5)/0/0, and with the proviso that a+b+c+d=1.

6. The process according to claim 5, whereby the residue R^{v} stands for hydrogen and the residue R^{u} stands for a mixture of a methyl group and hydrogen whereby, especially, a molar ratio of the methyl group to the hydrogen is in particular 25:75-75:25, in particular 40:60-60:40.

7. The process according to any of claims 5-6, whereby a weight average molecular weight of the group -[AO]ₙ-R₄ is 3'500-7'000 g/mol, especially 4'000 - 6'000 g/mol and a/(b+c+d) = 3 - 20, especially 5 - 15; in particular 8 - 13.

8. The process according to any of preceding claims, wherein a proportion of the dispersant with respect to the total weight of the inert mineral material and the liquid medium is 0.01 - 10 wt.%, especially 0.1 - 5 wt.%, in particular 1 - 3 wt.%.

9. The process according to any of preceding claims, wherein a weight ratio of the dispersant to the amino alcohol is from 0.25 - 4, especially 0.5 - 2, in particular 0.7- 1.5.

10. The process according to any of preceding claims, whereby the liquid medium contains water and/or alcohol, especially water; and whereby, based on the total weight of the liquid medium and the inert mineral material, the inert mineral material in the liquid medium has a proportion of 5-95 wt.%, especially 20 - 60 wt.%, in particular 40 - 60 wt.% or 45 - 55 wt.%.

11. The process according to any of preceding claims, wherein during the grinding process a proportion of mineral binder, especially cementitious mineral binder, is below 1 wt.%, in particular below 0.1 wt.% or 0 wt.%, based on the total weight of the inert mineral material.

12. The process according to any of preceding claims wherein the inert mineral material contains limestone and/or limestone flour.

13. The process according to any of preceding claims wherein grinding is performed until a dynamic viscosity in the range of 50 - 500 mPa s, especially 75 - 200 mPa s, at a temperature of 20°C and a shear rate of 500 s⁻¹ is obtained; and/or a dynamic viscosity in the range of 1'000 - 50'000 mPa s, especially 1'500 - 5'000 mPa s, at a temperature of 20°C and a shear rate of 1 s⁻¹ is obtained.

14. Use of an amino alcohol in combination with a dispersant for dispersing an inert mineral material in a liquid medium during a process of grinding of the inert mineral material in the liquid medium.

15. A setting and/or hardening accelerator obtainable by a process as claimed in any of claims 1-13.

16. A mineral binder composition, containing a component of a mineral binder composition, in particular a mineral binder and/or aggregates and/or an admixture, and a setting and/or hardening accelerator as claimed in claim 15.
